# EUROPÄISCHE PATENTSCHRIFT

(11) **EP 1 033 638 B1**
(45) Veröffentlichungstag und Bekanntmachung des Hinweises auf die Patenterteilung: **13.10.2004**
(21) Anmeldenummer: 00200502.3
(22) Anmeldetag: 16.02.2000
(51) Int. Cl.: G05D 23/275

(54) **Thermostatventilaufsatz**
Attachment for a thermostatic valve
Accessoire pour robinet thermostatique

(30) Priorität: 02.03.1999 DE 19909097
(43) Veröffentlichungstag der Anmeldung: 06.09.2000
(73) Patentinhaber: Danfoss A/S, 6430 Nordborg (DK)
(72) Erfinder: Frederiksen, Bjarne, 8600 Silkeborg (DK)

(56) Entgegenhaltungen:
- WO-A-94/29778
- DE-A- 3 135 895
- DE-A- 4 309 121
- M. JÄTH & B. MARTIN: "fernverstellbares thermostatventil zentralgesteuert" HLH, Bd. 38, Nr. 1, 1987, Seiten 7-10, XP002140302 Berlin DE

## Beschreibung

Die Erfindung betrifft einen Thermostatventilaufsatz mit einem Gehäuse, einem Thermostatelement, das über ein Verbindungselement auf ein Betätigungselement wirkt, und einer Verstelleinrichtung, die den Wirkzusammenhang zwischen Thermostatelement und Betätigungselement verändert.

Thermostatventilaufsätze dienen dazu, in einem Raum eine vorgegebene Solltemperatur mit Hilfe eines Heizkörpers oder einer Heizfläche einzustellen. In den meisten Fällen wird das Thermostatelement durch einen balgartigen Körper gebildet, der mit einer Füllung gefüllt ist, deren Volumen sich mit der Temperatur ändert. Dementsprechend wirkt das Thermostatelement über das Verbindungselement auf das Betätigungselement, das wiederum den Stößel eines Heizkörperventils betätigt. Üblicherweise wird das Heizkörperventil um so stärker gedrosselt, je weiter der Stößel eingeschoben ist.

Thermostatventilaufsätze dieser Art sind seit langem eingeführt und arbeiten zufriedenstellend. In einigen Bereichen möchte man jedoch den vorgegebenen Wirkzusammenhang zwischen dem Thermostatelement und dem Betätigungselement ändern, beispielsweise um den vorgegebenen Sollwert bei einer Nachtabsenkung abzusenken. In vielen Fällen reicht es aus, wenn der Sollwert der Raumtemperatur nachts um beispielsweise 4°C abgesenkt wird, weil ein gut isoliertes Haus nachts nur etwa 2 bis 3°C Temperatur verliert.

Ein Thermostatventilaufsatz der eingangs genannten Art ist aus DE 31 53 654 C2 bekannt. Hier ist zwischen dem Stößel des Thermostataufsatzes und dem Stößel des Heizkörperventils ein längenveränderbares Zwischenstück eingesetzt, das durch eine ovale Scheibe gebildet ist, die in einer Ausrichtung einen größeren Durchmesser hat als in der Ausrichtung 90° versetzt dazu. Die Scheibe ist schwimmend auf einem Drehkreuz gelagert, das seinerseits über ein Getriebe von einem Elektromotor angetrieben ist. Wenn der große Durchmesser des Zwischenstücks zwischen dem Aufsatzstößel und dem Ventilstößel eingestellt ist, dann schließt das Heizkörperventil bei ansonsten gleicher Temperatur früher.

Ein weiterer Thermostatventilaufsatz mit einem längenveränderbaren Zwischenstück ist aus Dokument DE-3135895 A1 bekannt.

Allerdings ist für diese Vorgehensweise ein erheblicher Bauraum erforderlich. Das Ventil verlängert sich in Axialrichtung, was nicht nur optisch stört, sondern auch die Gefahr vergrößert, daß der Thermostataufsatz aufgrund des verlängerten Hebelarmes versehentlich beschädigt oder sogar abgebrochen wird.

Der Erfindung liegt die Aufgabe zugrunde, den Aufbau des Thermostatventilaufsatzes zu vereinfachen.

Diese Aufgabe wird bei einem Thermostatventilaufsatz der eingangs genannten Art dadurch gelöst, daß das Verbindungselement eine Feder aufweist, die auf das Betätigungselement wirkt, und die Verstelleinrichtung auf den Gegenanschlag der Feder wirkt.

Damit ist ein zusätzlicher Bauraum für die Verstelleinrichtung in Axialrichtung weitgehend unnötig. Man kann sogar viele Teile von bislang bekannten Thermostataufsätzen verwenden. Der Eingriff in den Federweg ist relativ einfach. Eine derartige Feder ist in vielen Thermostataufsätzen als Überdruckfeder ohnehin vorhanden.

Dementsprechend läßt sich das Steuerverhalten des Thermostatventilaufsatzes auch mit Verstellmöglichkeit besser vorhersagen, weil man auf Erfahrungswerte von bereits vorhandenen Thermostatventilaufsätzen zurückgreifen kann.

Hierbei ist besonders bevorzugt, daß der Gegenanschlag in einer Spindel angeordnet ist, die an einem ersten Gewindestück anliegt, das mit einem zweiten Gewindestück in Eingriff steht, wobei die Mittelachsen der Gewinde der beiden Gewindestücke in die gleiche Richtung weisen wie die Druckrichtung der Feder. Die Verstellung des Gegenanschlags erfolgt damit also durch Verdrehen der beiden Gewindestücke gegeneinander. Dies erlaubt eine sehr starke Übersetzung, so daß der Verstellantrieb mit einem relativ geringen Drehmoment auskommen kann. Die Gewindestücke können die Spindel umgeben. In der Umgebung der Spindel steht noch genügend Bauraum zur Verfügung, der bislang ungenutzt war. Die Spindel liegt unter der Kraft der Feder am ersten Gewindestück an, beispielsweise mit einem umgebogenen Rand an ihrer Stirnseite. Dies erlaubt es, daß die Überdruckfeder ihre Sicherungsfunktion weiterhin erfüllen kann. Im Fehlerfall, d.h. wenn die Raumtemperatur stark ansteigt, kann die Spindel ausweichen und dabei die Feder zusammendrücken, so daß eine Beschädigung anderer Teile des Ventils oder des Thermostataufsatzes unterbleibt.

Vorzugsweise sind die Gewinde als Trapezgewinde ausgebildet. Eine derartige Gewindeausbildung erlaubt eine relativ reibungsarme Bewegung der beiden Gewindestücke gegeneinander. Damit wird der Energieverbrauch beim Verstellen klein gehalten, so daß der Verstellantrieb batteriegespeist ausgebildet sein kann und die Batterien eine relativ lange Lebensdauer haben.

Auch ist bevorzugt, daß das erste Gewindestück und die Spindel reibungsarm zusammenwirken. Hierzu kann es vorgesehen sein, daß die Spindel aus einem Kunststoff besteht, der mit dem Material, vorzugsweise einem Kunststoff, des ersten Gewindestücks reibungsarm zusammenwirkt. Man kann aber auch vorsehen, zwischen der Spindel und dem ersten Gewindestück eine Zwischenscheibe einzusetzen, beispielsweise aus Polytetrafluorethylen. ("Teflon").

Bevorzugterweise ist das zweite Gewindestück axial fest mit dem Betätigungselement verbunden. Das Betätigungselement ist damit der Widerpart, gegen den die Spindel verstellt wird. Da das Betätigungselement gleichzeitig auch der Anlagepunkt für die Feder ist, ergibt sich auf diese Weise ein eindeutiger Zusammenhang zwischen den Bewegungen der Spindel, der Feder und des Betätigungselements. Die axial feste Verbindung schließt nicht aus, daß beide Teile für eine Justierung gegeneinander verstellt werden können. Die feste Verbindung kann beispielsweise durch eine Gewindeverbindung gebildet sein, die im normalen Betrieb nicht verändert wird.

Mit Vorteil weist die Verstelleinrichtung ein Zahnradgetriebe auf, dessen letztes Zahnrad einen Fortsatz aufweist, der das erste Gewindestück bildet. Mit einem Zahnradgetriebe kann man eine noch weitergebende Übersetzung vom Motor auf das Gewindestück erreichen. Wenn das Gewindestück und das Zahnrad einstückig ausgebildet sind, dann erleichtert dies nicht nur die Fertigung beim Zusammenbau, es ergibt sich auch eine relativ große Betriebssicherheit.

Mit Vorteil weisen alle Zahnräder des Zahnradgetriebes die gleiche Achsrichtung auf. Die Drehmomentübertragung zwischen dem Antriebsmotor und dem Gewindestück erfolgt dann ausschließlich über Zahnradflanken. Auf diese Weise werden die Verluste im Zahnradgetriebe klein gehalten.

Mit Vorteil weist das Zahnradgetriebe ein Eingangszahnrad auf, das aus dem Gehäuse herausragt. Dieses Eingangszahnrad läßt sich dann von außen betätigen. Es stellt darüber hinaus sicher, daß es einen ausreichend großen Durchmesser aufweist, der zu dem gewünschten großen Übersetzungsverhältnis zwischen dem Antriebsmotor und dem Gewindestück führt.

Hierbei ist besonders bevorzugt, daß das Eingangszahnrad im Gehäuse gelagert ist und Lagerzapfen aufweist, die mit dem Material des Gehäuses reibungsarm zusammenwirken. Auch hierdurch werden die Verluste klein gehalten, so daß man einen relativ schwach dimensionierten Motor verwenden kann, der wiederum nur geringe Mengen an elektrischer Energie benötigt.

Vorzugsweise sind das Eingangszahnrad und das Gehäuse aus Kunststoff gebildet. Kunststoffe kann man gut aufeinander abstimmen, so daß die Teile mit geringen Verlusten zusammenwirken. Darüber hinaus ist ihre Herstellung kostengünstig.

Vorzugsweise weist die Verstelleinrichtung einen Antriebsmotor auf, der in einem Antriebsgehäuse angeordnet ist, das von außen am Gehäuse befestigbar ist. Der Antriebsmotor treibt dann das Eingangszahnrad an. Das Antriebsgehäuse kann auch noch die Batterien aufnehmen, d.h. den Energievorrat für den Antriebsmotor. Darüber hinaus können im Antriebsgehäuse noch die Teile und Elemente vorgesehen sein, die für die Steuerung des Antriebs notwendig sind, beispielsweise ein Empfänger für Signale, die von einer zentralen Steuereinrichtung abgegeben werden, oder eine Zeitschaltuhr.

Mit Vorteil weist das Antriebsgehäuse einen Schlitz zur Aufnahme des Eingangszahnrades auf. Es ist ansonsten geschlossen. Damit wird die Gefahr klein gehalten, daß Schmutzpartikel in das Antriebsgehäuse eindringen können.

Bevorzugterweise weist das Zahnradgetriebe ein Ritzel auf, das mit dem letzten Zahnrad kämmt, wobei das Zahnrad und das Ritzel eine axiale Eingriffsstrecke miteinander aufweisen, die mindestens der Bewegungshöhe der Spindel im Arbeitsbereich entspricht. Damit ist eine Verstellung des Sollwertes, d.h. ein Eingriff in den Wirkzusammenhang zwischen dem Thermostatelement und dem Betätigungselement im gesamten Arbeitsbereich des Ventilaufsatzes möglich. Die Spindel kann sich innerhalb des Arbeitsbereichs durch zwei Einflüsse bewegen. Zum einen bewegt sie sich dann, wenn der Gegenanschlag der Feder verstellt werden soll, um die aktive Länge der Strecke zwischen dem Thermostatelement und dem Betätigungselement zu verändern. Zum andern bewegt sie sich auch, wenn das Thermostatelement wirksam wird und die Spindel in Richtung auf das Heizkörperventil drückt, um dieses zu schließen. In all diesen Situationen ist eine Verstellung möglich, weil das letzte Zahnrad und das Ritzel gegeneinander axial verschoben werden können, ohne daß der Eingriff unterbrochen wird. Wenn die Spindel hingegen aufgrund eines Überdrucks eingedrückt wird, dann verläßt sie definitionsgemäß ihren Arbeitsbereich. Der Eingriff zwischen dem Ritzel und dem letzten Zahnrad bleibt dennoch erhalten, weil die Spindel dann ihre Anlage am ersten Gewindeteil verläßt. Auch in diesem Zustand ist also eine Verstellung möglich, die dann sogar noch etwas leichtgängiger erfolgen kann, weil die Spindel vom Gewindestück abgehoben ist und dementsprechend keine Reibung mehr erfolgt.

Vorzugsweise weist die Spindel eine Drehmomentstütze auf. Damit wird vermieden, daß die Spindel sich gegenüber dem Thermostatelement dreht. Die Steuerung wird insgesamt verbessert. Ohne diese Stütze könnte sich die ganze Einheit drehen, was die Justierung erschweren würde.

Die Erfindung wird im folgenden anhand eines bevorzugten Ausführungsbeispiels in Verbindung mit der Zeichnung näher beschrieben. Hierin zeigen:
- Fig. 1: einen schematischen Querschnitt durch einen Thermostataufsatz,
- Fig. 2: eine vergrößerte Darstellung eines Ausschnitts aus einem abgewandelten Ausführungsbeispiel und
- Fig. 3: einen Schnitt III-III nach Fig. 1.

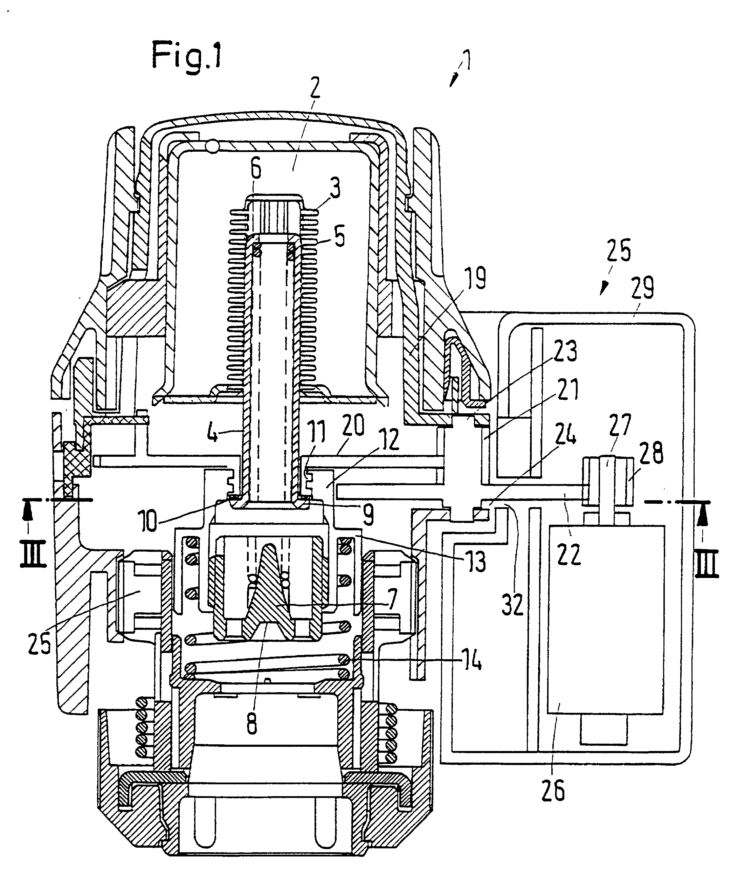

Fig. 1 zeigt einen Thermostataufsatz 1 mit einem Thermostatelement 2, das einen Balgen 3 aufweist, in dem eine Spindel 4 angeordnet ist. Das Thermostatelement 2 ist gefüllt mit einem Material, z.B. einer Flüssigkeit, das sich bei Temperaturerhöhung ausdehnt und bei Temperaturabsenkung sein Volumen vermindert. Dementsprechend wird bei einer Temperaturerhöhung der Balgen 3 zusammengedrückt und die Spindel 4 nach unten (bezogen auf die Ausrichtung der Fig. 1) verlagert.

In der Spindel 4 ist eine Überdruckfeder 5 angeordnet, die sich an der oberen Stirnseite der Spindel 4 abstützt. Im übrigen kann die Stirnseite 6 offen sein.

Die Überdruckfeder liegt mit ihrem anderen Ende an einem Konus 7 an, dessen unteres Ende eine Anlagefläche 8 für einen Stößel eines nicht näher dargestellten Heizkörperventils bildet. Wenn der Stößel eingedrückt wird, wird das Heizkörperventil stärker gedrosselt.

Die Spindel 4 weist an ihrem unteren Rand einen außen umlaufenden Flansch 9 auf, mit dem sie unter Zwischenlage einer Scheibe aus Teflon (Polytetrafluorethylen) an einem ersten Gewindestück 11 anliegt. Dieses Gewindestück 11 ist eingeschraubt in ein zweites Gewindestück, das wiederum einteilig ausgebildet ist mit einem Träger 13, in den der Konus 7 eingeschraubt ist. Der Träger 13 wird im übrigen von einer Druckfeder 14 nach oben gedrückt, d.h. von dem nicht näher dargestellten Ventilstößel weg. Der Träger 13 ist über eine Drehmomentstütze 17 am Gehäuse 19 abgestützt, d.h. er ist relativ zum Gehäuse 19 zwar axial verschiebbar, kann aber nicht gedreht werden.

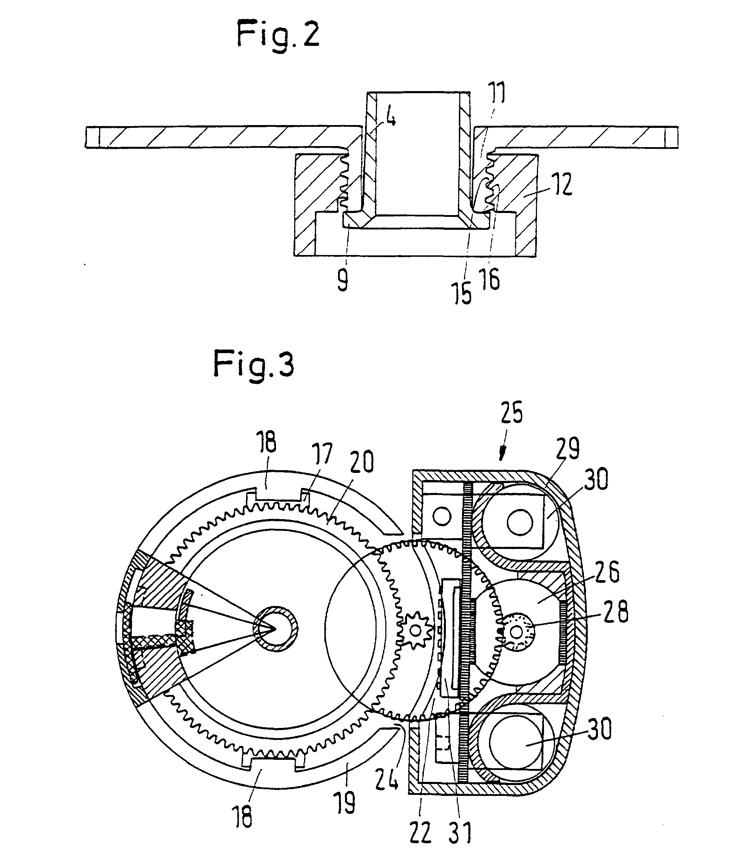

Fig. 2 zeigt die Paarung der beiden Gewindestücke 11, 12 in einer etwas vergrößerten Darstellung. Hieraus ist erkennbar, daß das Gewindestück 11 ein erstes Gewinde 15 und das Gewindestück 12 ein zweites Gewinde 16 aufweist, wobei die beiden Gewinde 15, 16 als Trapezgewinde ausgebildet sind. In Fig. 2 fehlt die Scheibe 10 zwischen der Spindel 4 und dem ersten Gewindestück 11. Dies ist möglich, solange die Spindel 4 und das erste Gewindestück 11 aus Materialien gebildet sind, die auch selbst reibungsarm zusammenwirken.

Wie aus Fig. 3 zu erkennen ist, ist die Spindel 4 mit einer Drehmomentstütze 17 versehen, die in Vorsprünge 18 am Gehäuse 19 des Thermostataufsatzes eingreift, so daß die Spindel 4 undrehbar gehalten ist.

Die Spindel 4 wird durch die Überdruckfeder 5 vom Konus 7 weggedrückt und mit ihrem Flansch 9 in Anlage am ersten Gewindestück 11 gehalten. Wenn nun das erste Gewindestück 11 und das zweite Gewindestück 12 gegeneinander verdreht werden, ändert sich die Länge des für die Überdruckfeder 5 zur Verfügung stehenden Raums, d.h. der Abstand zwischen dem Konus 7 und der Stirnseite 6 der Spindel 4, an denen sich die Überdruckfeder abstützt. Dementsprechend kommt das Thermostatelement 2 früher oder später zur Wirkung. Wenn der Abstand zwischen dem Konus 7 und der Stirnseite 6 größer ist, dann wird bei ansonsten gleicher Umgebungstemperatur das Heizkörperventil durch das Thermostatelement 2 früher gedrosselt als bei einem kleineren Abstand.

Um den Abstand zu verändern, ist das erste Gewindestück 11 einstückig mit einem Zahnrad 20 ausgebildet, das das letzte Zahnrad eines Zahnradgetriebes bildet. Das Zahnrad 20 kämmt mit einem Ritzel 21, das wiederum einstückig ausgebildet ist mit einem Eingangszahnrad 22. Die Kombination aus Ritzel 21 und Eingangszahnrad 22 weist Lagerzapfen 23 auf, die aus Kunststoff gebildet sind und im Gehäuse 19, das ebenfalls aus Kunststoff gebildet ist, drehbar gelagert sind. Hierbei ragt das Eingangszahnrad 22 durch einen Schlitz 24 im Gehäuse 19 nach außen.

An das Gehäuse 19 ist eine Antriebseinheit 25 angekoppelt, beispielsweise durch eine Schnappverbindung. Die Antriebseinheit 25 weist einen kleinen Elektromotor 26 auf, auf dessen Abtriebswelle 27 ein Ritzel 28 befestigt ist, das mit dem Eingangszahnrad 22 kämmt.

Die Antriebseinheit 25 weist ein Gehäuse 29 auf, in dem auch Batterien 30 angeordnet sind, die als Energiequelle für den Motor 26 dienen. Ferner ist in dem Gehäuse 29 eine Steuereinrichtung 31 untergebracht, die den Motor 26 steuert. Die Steuereinrichtung kann beispielsweise eine Zeitschaltuhr aufweisen. Sie kann auch einen Empfänger aufweisen, der Signale von einer Zentraleinheit (nicht näher dargestellt) empfängt und auf der Grundlage dieser Befehle den Motor 26 betätigt.

Wenn nun der Motor 26 betätigt wird, dann wird über das Zahnradgetriebe 22, 21, 20 das erste Gewindestück 11 relativ zum zweiten Gewindestück 12 verdreht. Damit verlängert oder verkürzt sich die wirksame "Spindellänge", d.h. der Abstand zwischen der Stirnseite 6 und dem Konus 7. Damit wird der Wirkzusammenhang zwischen dem Thermostatelement 2 und dem Konus 7 verändert, d.h. bei ansonsten unveränderten Umgebungstemperaturen schließt das Heizkörperventil, das durch den Thermostataufsatz 1 gesteuert ist, früher oder später.

Sollte ein Überdruck im Thermostatelement 2 auftreten, dann kann die Spindel gegen die Wirkung der Überdruckfeder 5 nach unten gedrückt werden. Sie kann hierbei vom ersten Gewindestück 11 abgehoben werden. In diesem Fall ist das Drehen des Zahnrades 20 sogar mit einer noch geringeren Reibung möglich, weil der Flansch 9 nicht mehr an dem ersten Gewindestück 11 anliegt.

Sämtliche gegeneinander verdrehbaren Teile sind so ausgelegt, daß sie möglichst reibungsarm zusammenwirken. Dies läßt sich durch eine geeignete Materialwahl erreichen. Sämtliche Rotationsachsen der Zahnräder und Ritzel des Zahnradgetriebes liegen parallel zueinander, so daß das Zahnradgetriebe einen größtmöglichen Wirkungsgrad hat. Darüber hinaus gestattet diese Ausbildung eine Relativbewegung des letzten Zahnrades 20 gegenüber dem Ritzel 21 in Axialrichtung. Das Zahnrad 20 und das Ritzel 21 haben dementsprechend auch eine relativ lange axiale Eingriffsstrecke, so daß über den gesamten Bewegungsbereich der Spindel 4 eine Verstellung der beiden Gewindestücke 11, 12 gegeneinander möglich ist. Die Verstellmöglichkeit ist auch dann gegeben, wenn die Spindel 4 vom ersten Gewindestück 11 abgehoben hat. Die Eingriffsstrecke zwischen dem letzten Zahnrad 20 und dem Ritzel 21 ist also so lang, daß der Eingriff nicht nur dann aufrecht erhalten werden kann, wenn die beiden Gewindestücke 11, 12 zwischen ihren beiden winkelmäßigen Endlagen gegeneinander verdreht werden, sondern der Eingriff bleibt auch dann erhalten, wenn das Thermostatelement 2 die Spindel 4 betätigt.

## Patentansprüche

1. Thermostatventilaufsatz (1) mit einem Gehäuse (19), einem Thermostatelement (2), das über ein Verbindungselement auf ein Betätigungselement (7) wirkt, und einer Verstelleinrichtung (11,12), die zur Änderung eines Wirkzusammenhangs eine aktive Länge einer Strecke zwischen Thermostatelement (2) und Betätigungselement (7) verändert, wobei das Verbindungselement eine Feder (5) aufweist, die auf das Betätigungselement (7) wirkt, die Verstelleinrichtung auf den Gegenanschlag der Feder wirkt, der Gegenanschlag (6) in einer Spindel (4) angeordnet ist, die an einem ersten Gewindestück (11) anliegt, das mit einem zweiten Gewindestück (12) in Eingriff steht, und die Mittelachsen der Gewinde der beiden Gewindestücke in die gleiche Richtung weisen wie die Druckrichtung der Feder (5), **dadurch gekennzeichnet, dass** die Verstelleinrichtung ein Zahnradgetriebe (20-22) aufweist, dessen letztes Zahnrad (20) einen Fortsatz aufweist, der das erste Gewindestück (11) bildet.

2. Thermostatventilaufsatz nach Anspruch 1, **dadurch gekennzeichnet, daß** die Gewinde (15, 16) als Trapezgewinde ausgebildet sind.

3. Thermostatventilaufsatz nach Anspruch 1 oder 2, **dadurch gekennzeichnet, daß** das erste Gewindestück (11) und die Spindel (4) reibungsarm zusammenwirken.

4. Thermostatventilaufsatz nach einem der Ansprüche 1 bis 3, **dadurch gekennzeichnet, daß** das zweite Gewindestück (12) axial fest mit dem Betätigungselement (7) verbunden ist.

5. Thermostatventilaufsatz nach Anspruch 1, **dadurch gekennzeichnet, daß** alle Zahnräder (20-22) des Zahnradgetriebes die gleiche Achsrichtung aufweisen.

6. Thermostatventilaufsatz nach Anspruch 1 oder 5, **dadurch gekennzeichnet, daß** das Zahnradgetriebe (20-22) ein Eingangszahnrad (22) aufweist, das aus dem Gehäuse (19) herausragt.

7. Thermostatventilaufsatz nach Anspruch 6, **dadurch gekennzeichnet, daß** das Eingangszahnrad (22) im Gehäuse (19) gelagert ist und Lagerzapfen (23) aufweist, die mit dem Material des Gehäuses (19) reibungsarm zusammenwirken.

8. Thermostatventilaufsatz nach Anspruch 7, **dadurch gekennzeichnet, daß** das Eingangszahnrad (22) und das Gehäuse (19) aus Kunststoff gebildet sind.

9. Thermostatventilaufsatz nach einem der Ansprüche 1 bis 8, **dadurch gekennzeichnet, daß** die Verstelleinrichtung einen Antriebsmotor (26) aufweist, der in einem Antriebsgehäuse (29) angeordnet ist, das von außen am Gehäuse (19) befestigbar ist.

10. Thermostatventilaufsatz nach Anspruch 9, **dadurch gekennzeichnet, daß** das Antriebsgehäuse (29) einen Schlitz (32) zur Aufnahme des Eingangszahnrades (22) aufweist.

11. Thermostatventilaufsatz nach einem der Ansprüche 4 bis 10, **dadurch gekennzeichnet, daß** das Zahnradgetriebe (20-22) ein Ritzel (21) aufweist, das mit dem letzten Zahnrad (20) kämmt, wobei das Zahnrad (20) und das Ritzel (21) eine axiale Eingriffsstrecke miteinander aufweisen, die mindestens der Bewegungshöhe der Spindel (4) im Arbeitsbereich entspricht.

12. Thermostatventilaufsatz nach einem der Ansprüche 1 bis 11, **dadurch gekennzeichnet, daß** die Spindel eine Drehmomentstütze (17) aufweist.

## Claims

1. Thermostatic valve top part (1) with a housing (13), a thermostatic element (2) acting via a connecting element on an operating element (7), and an adjusting device (11, 12), which changes an active connection by changing an active length of a path between the thermostatic element (21) and the operating element (7), the connecting element having a spring (5), which acts upon the operating element (7), the adjusting device (11, 12) acting upon the counterstop (6) of the spring (5), the counterstop (6) being arranged in a spindle (4) bearing on a first thread piece (11), which engages with a second thread piece (12), the middle axes of the threads of the two thread pieces pointing in the same direction as the pressure direction of the spring (5), **characterised in that** the adjusting device has a toothed gearing (20 to 22), whose last toothed wheel (20) has a projection forming the first thread piece (11).

2. Thermostatic valve top part according to claim 1, **characterised in that** the thread (15, 16) is a tapered thread.

3. Thermostatic valve top part according to claim 1 or 2, **characterised in that** the first thread piece (11) and the spindle (4) interact at low friction.

4. Thermostatic valve top part according to one of the claims 1 to 3, **characterised in that** the second thread piece (12) is fixed axially on the operating element (7).

5. Thermostatic valve top part according to claim 1, **characterised in that** all gear wheels (20 to 22) of the toothed gearing have the same axis direction.

6. Thermostatic valve top part according to claim 1 or 5, **characterised in that** the toothed gearing (20 to 22) has an inlet gear wheel (22) projecting from the housing (19).

7. Thermostatic valve top part according to claim 6, **characterised in that** the inlet gear wheel (22) is supported in the housing (19) and has bearing pins (23), which interact with the housing material (19) at low friction.

8. Thermostatic valve top part according to claim 7, **characterised in that** the inlet gear wheel (22) and the housing (19) are made of a plastic material.

9. Thermostatic valve top part according to one of the claims 1 to 8, **characterised in that** the adjusting device has a drive motor(26), which is arranged in a drive housing (29), which is fixed on the housing (19) from the outside.

10. Thermostatic valve top part according to claim 9, **characterised in that** the drive housing (29) has a slot (32) for adopting the inlet gear wheel (22).

11. Thermostatic valve top part according to one of the claims 4 to 10, **characterised in that** the toothed gearing (20 to 22) has a pinion (21), which meshes with the last gear wheel (20), gear wheel (20) and pinion (21) having a mutual axial meshing path, corresponding at least to the movement height of the spindle (4) in the working area.

12. Thermostatic valve top part according to one of the claims 1 to 11, **characterised in that** the spindle has a torque support (17).

## Revendications

1. Garniture de robinet thermostatique (1) comportant un boîtier (19), un thermostat (2) qui agit sur un élément d'actionnement (7) par l'intermédiaire d'un élément de liaison et un dispositif de réglage (11, 12) qui, pour modifier un rapport actif, modifie une longueur active d'un parcours entre le thermostat (2) et l'élément d'actionnement (7), l'élément de liaison présentant un ressort (3) qui agit sur l'élément d'actionnement (7), le dispositif de réglage agissant sur la contre-butée du ressort et la contre-butée (6) du ressort étant disposé dans une broche (4) qui plaque contre une première pièce filetée (11) qui est en engagement avec une deuxième pièce filetée (12) et les axes centraux des filets des deux pièces filetées étant dirigés dans le même sens que le sens de compression du ressort (5), **caractérisée en ce que** le dispositif de réglage présente un engrenage (20 - 22) dont la dernière roue dentée (20) présente un prolongement qui forme la première pièce filetée (11).

2. Garniture de robinet thermostatique selon la revendication 1, **caractérisée en ce que** les filets (15, 16) sont configurés en filets trapézoïdaux.

3. Garniture de robinet thermostatique selon la revendication 1 ou 2, **caractérisée en ce que** la première pièce filetée (11) et la broche (4) interagissent à faible frottement.

4. Garniture de robinet thermostatique selon l'une quelconque des revendications 1 à 3, **caractérisée en ce que** la deuxième pièce filetée (12) est reliée à l'élément d'actionnement (7) sans faculté de mouvement axial.

5. Garniture de robinet thermostatique selon la revendication 1, **caractérisée en ce que** toutes les roues dentées (20 - 22) de l'engrenage ont la même direction axiale.

6. Garniture de robinet thermostatique selon la revendication 1 ou 5, **caractérisée en ce que** l'engrenage (20 - 22) présente une roue dentée d'entrée (22) qui dépasse du boîtier (19).

7. Garniture de robinet thermostatique selon la revendication 6, **caractérisée en ce que** la roue dentée d'entrée (22) est logée dans le boîtier (19) et présente des tourillons (23) qui interagissent avec la matière du boîtier (19) à faible frottement.

8. Garniture de robinet thermostatique selon la revendication 7, **caractérisée en ce que** la roue dentée d'entrée (22) et le boîtier (19) sont en matière plastique.

9. Garniture de robinet thermostatique selon l'une quelconque des revendications 1 à 8, **caractérisée en ce que** le dispositif de réglage présente un moteur d'entraînement (26) qui est disposé dans un boîtier d'entraînement (29) qui peut être fixé de l'extérieur sur le boîtier (19).

10. Garniture de robinet thermostatique selon la revendication 9, **caractérisée en ce que** le boîtier d'entraînement (29) présente une fente (32) pouvant recevoir la roue dentée d'entrée (22).

11. Garniture de robinet thermostatique selon l'une quelconque des revendications 4 à 10, **caractérisée en ce que** l'engrenage (20 - 22) présente un pignon (21) qui s'engrène avec la dernière roue dentée (20), la roue dentée (20) et le pignon (21) présentant ensemble une longueur d'engagement axial qui correspond au moins à la hauteur de déplacement de la broche (4) dans la zone de travail.

12. Garniture de robinet thermostatique selon l'une quelconque des revendications 1 à 11, **caractérisée en ce que** la broche présente une cale anti-rotation (17).
